# EUROPÄISCHE PATENTANMELDUNG

(11) **EP 4 220 911 A1**
(43) Veröffentlichungstag der Anmeldung: **02.08.2023**
(21) Anmeldenummer: 22154323.4
(22) Anmeldetag: 31.01.2022
(51) Int. Cl.: H02K 5/128, H02K 9/197

(54) **ELEKTRISCHE ROTIERENDE MASCHINE MIT SPALTROHR**

(71) Anmelder: Siemens Aktiengesellschaft, 80333 München (DE); Siemens Mobility GmbH, 81739 München (DE)
(72) Erfinder: Adam, Christoph, 90411 Nürnberg (DE); Finck, David, 91301 Forchheim (DE); Großhauser, Johannes, 90530 Wendelstein (DE); Johannes, Martin, 91058 Erlangen (DE); Körner, Olaf, 90469 Nürnberg (DE); Ntourmas, Felix, 91052 Erlangen (DE); Seidel, Christian, 91083 Baiersdorf (DE); Stapfner, Johann, 90547 Stein (DE); Wetzel, Wolfgang, 91074 Herzogenaurach (DE)
(74) Vertreter: Siemens Patent Attorneys

(57) **Zusammenfassung**

Elektrische rotierende Maschine mit Spaltrohr

Die Erfindung betrifft Spaltrohr für eine elektrische rotierende Maschine, wie z.B. einen Elektromotor, einen Generator, insbesondere einen Windturbinengenerator, und/oder eine Flüssigkeitspumpe. Durch die vorliegende Erfindung wird erstmals eine spannungsarme, Laminat-schonende und/oder annähernd beanspruchungsfreie Lagerung des Spaltrohres einer elektrischen rotierenden Maschine offenbart, weil das Dichtungskonzept eine beidseitige, insbesondere eine beidseitige und symmetrische Belastung des Spaltrohrs vorsieht.

## Beschreibung

Die Erfindung betrifft Spaltrohr für eine elektrische rotierende Maschine, wie z.B. einen Elektromotor, einen Generator, insbesondere einen Windgenerator, und/oder eine Flüssigkeitspumpe.

Der Steigerung der Leistungsdichte von elektrischen rotierenden Maschinen kommt auch auf dem elektrifizierten Gebiet der Mobilität, wie z. B. bei elektrisch angetriebenen Kraftwagen wie Bussen, Personenkraftwagen, Nutzfahrzeugen, bei Zügen und Schiffen, sowie Flugzeugen immer größere Bedeutung zu, weil sich durch leistungsstärkere Motoren Material und/oder Gewicht einsparen lässt.

Daher wird verstärkt auf flüssigkeitsgekühlte elektrische rotierende Maschinen, insbesondere Elektromotoren, gesetzt.

Dimensionierend für die elektrische Leistungsdichte eines Elektromotors und/oder Generators ist die produzierte Abwärme mit den damit einhergehenden Problemen. Ein Problem ist z.B. das Versagen der polymeren Isolation der Wickelspulen in den Blechpaketen des Stators jedes Elektromotors. Daher ist auch typischerweise die maximale Temperatur in der Stator-Wicklung bei der Entwicklung höherer Leistungsdichten im Elektromotor ein besonders kritischer Punkt.

Der Trend zur Flüssigkeitskühlung, insbesondere durch Öldirekt-Kühlung, ist begründet in dem höheren Abwärmestrom, welcher durch eine Flüssigkeitskühlung, im Vergleich mit einer Gas-Luft-Kühlung erreichbar ist. Dabei wird in der Regel beim flüssigkeitsgekühlten Elektromotor der Stator mit den Blechpaketen und den in polymerem Verguss vorliegenden Wickelspulen gekühlt, nicht der Rotor. Der Rotor ist weniger wärmeempfindlich als die Blechpakete des Stators, die einen polymeren Verguss haben.

Zwar zeigen Mantelkühlungen des Stators bereits gute Kühlergebnisse, allerdings ist mit einer Spaltrohr-Konstruktion eine noch bessere, weil direktere Kühlung zu erreichen, bei der auf der Spulen-Innenseite eine Kühlflüssigkeit, insbesondere ein Öl mit guten Kühleigenschaften, zirkuliert. Um Reibungsverluste des Rotors in der Flüssigkeit zu vermeiden, ist es Stand der Technik, ein so genanntes Spaltrohr im Luftspalt zu platzieren, welches die Flüssigkeit vom Rotorbereich trennt.

Spaltrohre finden beispielsweise bei der Flüssigkeits-Kühlung des Stators Verwendung, wo der Flüssigkeits-freie Bereich des Rotors gegenüber dem Flüssigkeits-enthaltendem Bereich des Stators hermetisch abgedichtet ist. Durch das Spaltrohr wird der mit dem Kühlmittel gefüllte Bereich des Stators abgedichtet, wobei das Spaltrohr mit seinen Axialenden in einem Radialspalt angeordnet ist.

Eine elektrische rotierende Maschine mit größerer Leistungsdichte zeigt auch im mobilen Einsatzbereich offensichtliche Vorteile. Die kompaktere Bauform ermöglicht leichtere Einbaulagen und die höhere Leistungsdichte verfolgt auch indirekt den Leichtbaugedanken, da eine kleinere elektrische rotierende Maschine für die erforderliche Leistung eingesetzt werden kann. Jedoch zeigen sich auch Vorteile in stationären Anwendungen, wie z.B. in Windrädern. Hier kann durch die geringere Generatormasse die gesamte Turmkonstruktion weniger massiv ausgeführt werden. Auch kann die thermische Lebensdauer der eingesetzten Statorwicklungen besser abgeschätzt und verlängert werden durch die bessere Entwärmung.

Die an ein Spaltrohr der eingangs erwähnten Art gestellten konstruktiven Anforderungen sind:
a) Möglichst geringe Wandstärke: Je dicker das Spaltrohr ist, desto größer werden die magnetischen Verluste der elektrischen rotierenden Maschine. Um folglich die magnetischen Eigenschaften der Maschine so gering wie möglich negativ zu beeinflussen, ist es erforderlich die Wandstärke des Spaltrohrs so gering wie möglich anzusetzen.
b) Möglichst hohe Formstabilität unter Außendruck: Durch die unter Druck betriebene Flüssigkeitskühlung wirkt eine Außendrucklast auf das Spaltrohr. Diese Drucklast verformt das Spaltrohr in Abhängigkeit seiner Formstabilität. Die Verformung wird bei der Auslegung der Luftspaltbreite berücksichtigt und erhöht damit die magnetischen Verluste. Der maximale Systemdruck ist von dem Betriebsszenario abhängig und setzt sich - beispielsweise - aus variablen Komponente(n) wie Beschleunigung, Druckstöße etc. und konstanten Komponente(n) wie Gravitation, die auf die Flüssigkeitssäule wirkt, zusammen.
c) Möglichst hohe Beulstabilität: Aufgrund der hauptsächlich vorliegenden Außendrucklast ist ein Versagen des Spaltrohrs im Betrieb vor allem durch Beulen zu erwarten. Die Anforderung einer hohen Formstabilität gegen Außendruck wie bereits oben erwähnt, so dass vor allem eine hohe Steifigkeit des Spaltrohrs erforderlich ist. Für die Auslegung des Spaltrohrs bei der Konstruktion ist dabei entscheidend, dass der Außendruck einen gewissen Mindestabstand zum so genannten "kritischen Punkt" der Formstabilität des Spaltrohrs einhält. Dieser "kritische Punkt" wird auch "Beulpunkt" genannt und wird durch steifere Materialien und/oder größere Wandstärken zu höheren Drücken verschoben.
d) Elektrische Leitfähigkeit: Da das Spaltrohr im Luftspalt wechselnden Magnetfeldern ausgesetzt ist, soll die elektrische Leitfähigkeit des Rohres grundsätzlich so niedrig wie möglich sein. Die Induktion von zu hohen Wirbelströmen in das Spaltrohr führt zu einer Verringerung der elektrischen Effizienz der elektrischen rotierenden Maschine und zur Erwärmung des Spaltrohrs, wodurch auch die temperaturabhängigen strukturellen Eigenschaften des Spaltrohrs negativ beeinflusst werden.

Daher wird ein Spaltrohr konzeptionell dünnwandig, nicht magnetisierbar metallisch oder polymer, beispielsweise zumindest teilweise faserverstärkt ausgearbeitet. Das Spaltrohr, wie oben erwähnt ist die Trennwand zwischen Flüssigkeitsgefülltem und Flüssigkeits-leerem Bereich im Gehäuse der elektrischen rotierenden Maschine. Schlüsselelement für einen funktionierenden Betrieb ist dabei vor allem auch eine zuverlässige Dichtung zwischen den beiden genannten Bereichen.

Aus der DE 10 2020 121 707 B1 ist eine elektrische Maschine mit einem direktgekühltem Stator, einem Rotor, sowie einem Spaltrohr, wobei das Spaltrohr in einem Ringspalt zwischen dem Statorbereich und dem Rotorbereich angeordnet ist, wobei an der Innenseite des Spaltrohrs an jedem Axialende des Spaltrohrs eine Dichtung angeordnet ist, bekannt. Die Dichtung ist hier in einem Gehäuseteil der elektrischen Maschine angeordnet und presst sich durch die Druckbelastung der Kühlfülssigkeit im Statorbereich an das Axialende des Spaltrohrs.

Nachteilig an dieser Konstruktion ist zum einen, dass im Betrieb der Anpressdruck des Dichtelements zu einer einseitigen Belastung des Spaltrohres führt und zweitens, dass für die Dichtung ein zusätzliches Trägerelement am Gehäuse der elektrischen Maschine anzuordnen ist.

Aufgabe der vorliegenden Erfindung ist es, die Nachteile des Standes der Technik zu überwinden und eine Konstruktion für eine Dichtung eines Spaltrohrs einer elektrischen rotierenden Maschine zur Verfügung zu stellen, die ein dünnwandiges Spaltrohr so wenig wie möglich belastet und so einfach wie möglich konzipiert ist.

Diese Aufgabe wird durch den Gegenstand der vorliegenden Erfindung, wie er in den Ansprüchen, der Beschreibung und den Figuren offenbart ist, gelöst.

Dementsprechend ist Gegenstand der vorliegenden Erfindung eine elektrische rotierende Maschine einen
- ersten Bereich, der Flüssigkeits-frei ist, insbesondere mit einem Rotor, einen
- zweiten Bereich, der Flüssigkeits-enthaltend ist, insbesondere mit einem Stator und
- ein Spaltrohr, das die beiden Bereiche voneinander abdichtend trennt,
   aufweisend,
   wobei an jedem Axialende auf der Stator- und Rotorseitigen Oberfläche des Spaltrohrs ein oder mehrere Elemente vorgesehen sind, wobei die Elemente gleich, ungleich, ummantelnd und/oder beidseitig wirkend sind, so dass durch das oder die Element(e) ein zumindest teilweiser Ausgleich der am Axialende des Spaltrohrs durch die Abdichtung wirkenden Kräfte resultiert.

Die hier offenbarte technische Lehre lässt sich auf elektrische rotierende Maschinen genau wie auf Flüssigkeitspumpen realisieren, wobei der Flüssigkeits-enthaltende Bereich, der Pumpe nicht der der elektrischen rotierenden Maschine ist, aber die Funktion des Spaltrohrs gleichbleibt.

Die beidseitige Anbringung von Dichtelementen verhindert, dass sich das Spaltrohr am Axialende durch den Anpressdruck einer einseitig angebrachten Dichtung verbiegt.

Allgemeine Erkenntnis der Erfindung ist es, dass die Abdichtung des Spaltrohrs durch beidseitig am Axialende des Spaltrohrs angeordnete Dichtelemente sich vorteilhaft auf das gesamte Konzept des Spaltrohrs auswirkt.

Als "Element" wird vorliegend ein Druckelement, beispielsweise ein "Dichtelement" und/oder ein Element zur Stabilisierung des Spaltrohrs an der Stelle, bezeichnet. Zumindest Stator-seitig, also auf der Seite des Spaltrohrs, auf der sich die Flüssigkeit, die den Stator kühlt, befindet, ist dabei ein Dichtelement vorgesehen.

Beispiele für Dichtelemente sind insbesondere elastomere Formkörper, die sich durch den Druck, den die Flüssigkeit auf sie ausübt, noch besser andichtend an das Spaltrohr und zwischen Spaltrohr und Gehäuse oder Lagerschild einpassen. Beispielsweise ist das aus der DE 10 2020 121 707 B3 bekannte Dichtelement ein geeigneter Formkörper, der Stator-seitig einsetzbar ist.

Des Weiteren wird vorliegend als Dichtelement beispielsweise ein O-Ring, eine ringförmige Nutauskleidung, eine Ummantelung des Axialendes des Spaltrohrs und/oder ähnliche das Axialende eines zylindrischen Körpers vom Umfang her abdichtende Formkörper, insbesondere bevorzugt aus einem gummielastischem Material und/oder aus einem Elastomer bezeichnet.

Geeignete Formkörper, die als Dichtelement oder als Element einsetzbar sind, werden auch durch die Figuren zusammen mit der Beschreibung dazu, offenbart.

Nach einer vorteilhaften Ausführungsform der Erfindung werden beispielsweise zwei O-Ringe zur Abdichtung pro Axialende des Spaltrohrs angebracht. Dabei ist einer oder sind beide O-Ringe beispielsweise in einer entsprechenden Trägerkonstruktion, wie z.B. einer Ringnut, die wiederum beispielsweise, um den Luftspalt herum vorgesehen sind, angeordnet.

Dabei ist insbesondere zu beachten, dass ein Dichtelement unter Druck, wie hier unter Flüssigkeitsdruck, allgemein eine nicht unerhebliche, lokale Beanspruchung auf ein fragiles, weil so dünnwandig wie möglich konzipiertes, Spaltrohr ausübt. Erfahrungsgemäß erreichen die lokal erzeugten Spannungen sogar Auslegungsgrenzen beispielsweise für typische Spaltrohre aus Faserverbundwerkstoffen.

Gemäß der Erfindung soll insbesondere verhindert werden, dass ein Spaltrohr, das beispielsweise aus Faserverbundwerkstoff, typischerweise hergestellt in einem Wickelverfahren mit einer elektrisch leitenden Verstärkungsfaser, wie z. B. einer Karbonfaser, die vorzugsweise entlang des Rohrumfangs gelegt sind, hergestellt ist, durch einseitige Anbringung eines Elements, insbesondere eines Dichtelements und ganz besonders bevorzugt beispielsweise eines O-Rings, an der Stelle der Anbringung des Elements verbogen wird.

Eine Verbiegung des Spaltrohrs am Axialende, wo insbesondere ein Dichtelement vorgesehen ist, damit die Flüssigkeit nicht vom Stator-Bereich in den Rotor-Bereich gelangt, kommt beispielsweise wegen der herkömmlich bevorzugten Ausführungsform des Spaltrohrs aus Faserverbundwerkstoff folgende Problematik vor:
Das Spaltrohr wird aus Faserverbundwerkstoff gewickelt, wobei für eine möglichst hohe Formstabilität des Spaltrohrs - wie schon einleitend über die Gefahr des Ausbeulens erwähnt - gegen Außendruck und geringe Anfälligkeit für Wirbelstromverluste eine Ausrichtung der Verstärkungsfaser im Spaltrohr möglichst nahe in tangentialer, d.h. entlang des Rohrumfangs,
verlaufender Richtung - wie aus der DE 10 2020 205286 bekannt - Richtung verläuft. Eine Wicklung dieser vorteilhaften Ausführungsform - die beispielsweise einen Laminat-Aufbau eines Spaltrohrs bedingt, bringt jedoch den Nachteil mit sich, dass sie dem Spaltrohr wenig Verstärkung in axialer Richtung verleiht, so dass das so gewickelte Faser-verstärkte Spaltrohr in axialer Richtung wenig Steifigkeit und wenig Festigkeit hat.

Ein Element, das am Axialende eines Spaltrohrs vollumfänglich angebracht wird, wie beispielsweise ein O-Ring, braucht, um wirksam abzudichten, einen gewissen Mindest-Anpressdruck im Flüssigkeits-belastetem Stator-Bereich, damit eine ausreichende Dichtigkeit gegenüber dem Flüssigkeitsaustritt aus dem Stator-Bereich resultiert. Dies umso mehr, als auch die Lagerung bei Belastungen des Spaltrohrs durch dieses Element beeinflusst und vorteilhafterweise verstärkt wird.

Die so erfolgende Kompression eines Elements, wie z.B. eines Dichtelements, beispielsweise in Form eines O-Rings, geht dann mit einem Aufbiegen des Spaltrohrs einher und erzeugt lokal innere Biege- und Schubspannungen im Spaltrohr, wobei vor allem den in axialer Richtung verlaufenden Spannungskomponenten aufgrund des oben beschriebenen Wicklungsaufbaus kein ausreichendes Gegengewicht durch die Faserverstärkung des Faserverbundwerkstoffs entgegensteht.

Zusätzlich besteht die Gefahr, dass das Spaltrohr je nach Wandstärke in kritischen Größenordnungen aufgebogen wird, was die Kompression des Elements, wie z. B. des O-Rings, negativ beeinflusst.

Nach einer vorteilhaften Ausführungsform der Erfindung dient beispielsweise ein Doppel-O-Ring System dazu, die wirkenden Kräfte der Abdichtung auf das Spaltrohr und/oder die entsprechenden Spannungskomponenten auszugleichen. Dazu werden nach einer insbesondere vorteilhaften und massenfertigungstauglichen Ausführungsform der Erfindung zwei O-Ringe, bevorzugt auch ungefähr gleicher Beschaffenheit - in beidseitigen Nuten verbaut, so dass Rotor-seitig und Stator-seitig des Spaltrohrs die gleichen Elemente an zumindest einem Axialende des Spaltrohrs vorliegen.

Die Kräfte der beiden - bevorzugt symmetrisch Stator- und Rotor-seitig am jeweiligen Axialende des Spaltrohrs angeordneten - Elemente der Abdichtung und/oder Lagerung gleichen sich gegenseitig zumindest teilweise aus, so dass das Spaltrohr nahezu spannungsfrei gelagert werden kann. Somit sind auch die Nachteile, die sich durch die Rohrumfangsseitige Wicklung ergeben, keine oder nur eine untergeordnete Rolle spielen, weil keine wesentlichen inneren Spannungen mehr in axialer Richtung auftreten.

Nach einer vorteilhaften Ausführungsform liegen die beiden Elemente als Dichtelemente in Form von O-Ringen vor. Dabei ist es besonders vorteilhaft, wenn die Elemente durch eine Aufnahmevorrichtung, beispielsweise in Form einer Nut, gehalten werden. Besonders bevorzugt werden die O-Ringe dabei in einer Trapezförmigen Nut eingelassen, weil
- die Montage dadurch vereinfacht wird, da die O-Ringe in den Trapeznuten gut fixierbar sind. Dies ist besonders von Vorteil bei der Montage des außenliegenden O-Rings, d.h. bei der so genannten "Über-Kopf-Montage".
- Es kann durch die Anbringung einer Aufnahmevorrichtung, wie beispielsweise der Nut, sichergestellt werden, dass die beiden Elemente symmetrisch am Spaltrohr, sich gegenüberliegend fixiert werden und sich auch nicht im Betrieb verschieben. Weniger geeignet als die trapezförmige Nut scheint aus momentaner Sicht deshalb das Konzept einer U-förmigen Nut.
- Durch die Fixierung in der Nut kann auch ein Verdrehen und/oder Verdrillen der O-Ringe weitestmöglich unterdrückt werden.
- Die O-Ringe, im Vergleich zur U-förmigen Nut, axial fixiert sind und sich somit exakt gegenüber liegen. Nur so kann sichergestellt werden, dass der Kraftausgleich auch effektiv funktioniert. In einer U-förmigen Nut hat der O-Ring axial mehr Spielraum.

Dabei kann nach einer besonders vorteilhaften Ausführungsform vorgesehen sein, dass eine oder mehrere vorgesehenen Ringnuten als Aufnahmevorrichtung für das oder die Elemente nicht rechteckig gestaltet sind, sondern beispielsweise rund, gezackt, geriffelt, mit -vor allem innen - klebriger und/oder rauer Oberflächenbeschaffenheit, trapezförmig mit sich nach innen erweiterndem Querschnitt.

Die Aufnahmevorrichtung ist beispielsweise in einer Tragkonstruktion vorgesehen. Die eine oder mehrere Tragkonstruktion(en) kann/können insbesondere auch integraler Teil des Gehäuses der elektrischen rotierenden Maschine und/oder auch Teil des Lagerschildes sein.

Die Tragkonstruktion kann beispielsweise aus Metall, einer Metalllegierung, aus Stahl, aus Keramik und/oder aus einem Leichtbaumaterial, wie einem Faserverbundwerkstoff, gefertigt sein.

Ein Faserverbundwerkstoff ist ein aus im Allgemeinen zwei Hauptkomponenten - eine bettende Matrix und verstärkende Fasern - umfassender Mehrphasen- oder Mischwerkstoff. Durch gegenseitige Wechselwirkungen der beiden Komponenten erhält dieser höherwertige Eigenschaften als jeder der beiden einzeln beteiligten Komponenten. Faserverbundwerkstoffe umfassen als bettende Matrix beispielsweise Kunstharze, wie duroplastische Kunstharze. Zur Faserverstärkung können Glasfasern, Karbonfasern, Aramidfasern, Keramikfasern und weitere eingesetzt werden.

Die eine oder mehrere Tragkonstruktion(en) können insbesondere auch integraler Teil des Gehäuses der elektrischen rotierenden Maschine und/oder auch Teil eines Lagerschildes sein.

Weitere Vorteile aus der Systemperspektive sind:
- Es wird eine doppelt so steife Lagerung, verglichen mit einem einzelnen O-Ring für das Spaltrohr, hergestellt, weshalb Bewegungstoleranzen im Luftspalt niedriger ausfallen;
- Durch die weitgehende Lastfreiheit auf dem Rohr können auch deutlich steifere Dicht-Materialien eingesetzt werden im Vergleich zur Lagerung mit einem einzelnen Dichtelement ohne gegenüberliegendes Gegenspieler-Element. Die steiferen Dichtelemente tragen ebenfalls zu einer steiferen Lagerung.
- Durch die mögliche Verwendbarkeit einer breiten Variation von Dichtungssteifigkeiten ist eine breitere Marktverfügbarkeit auch günstiger Einkauf möglich.
- Im Falle der Anbringung zweier Dichtelemente Stator- und Rotorseitig herrscht eine verbesserte Dichtungssicherheit zum Rotor, da das kühlende Fluid aus dem Statorbereich zwei Dichtelemente zu überwinden hat.
- Problematisch könnte sein, dass die Flüssigkeit im Statorbereich sich in einer Tasche zwischen den Dichtelementen sammelt und/oder durch Bewegung des Spaltrohres zu pumpen beginnt und sich durch die Dichtungen drückt. Deshalb sieht eine bevorzugte Ausführungsform der Erfindung auch die Anbringung eines Ablaufs Stator-seitig vor.
- Ganz generell herrscht eine verbesserte Dichtungssicherheit zum Rotor, da das Spaltrohr nicht aufgebogen wird durch eine einseitige Belastung durch ein Dichtelement.

Im Weiteren wird die Erfindung noch anhand von Figuren, die eine Simulation eines einfachen U-Nut und Doppel O-Ring Ausführungsbeispiels und weitere beispielhafte Ausführungsformen der Erfindungen zeigen, näher erläutert.
Figur 1 zeigt das Ergebnis einer Simulation von Referenzkonstruktionen zweier jeweils einseitig aufgebrachter Dichtelemente im Vergleich zu einem Ausführungsbeispiel der Erfindung
Figur 2 zeigt schematisch eine Ausführungsform der Erfindung mit trapezförmiger Nut und Doppel-O-Ring Dichtung am Spaltrohr
Figur 3 zeigt die Ausführungsform von Figur 2 in detaillierter Darstellung mit Einführschrägen und Ablauf
Figur 4 zeigt eine andere Ausführungsform der Erfindung mit beidseitig umgreifendem Dichtelement und
Figur 5 zeigt eine weitere Ausführungsform der Erfindung mit beidseitig umgreifendem Dichtelement.

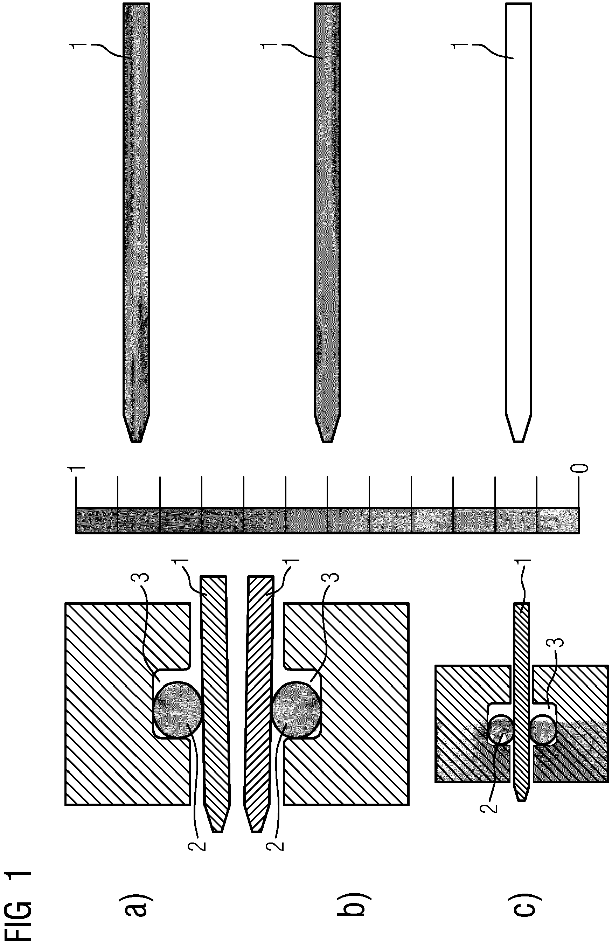

Figur 1 zeigt die Graphiken von Untersuchungen zur Beanspruchungssituation bei der Anbringung von Dichtelementen, hier O-Ringen an Spaltrohren aus Faserverbundwerkstoff -FKV-Spaltrohre - mit der beschriebenen vorteilhaften Rohrumfänglichen, insbesondere 80° bis 90°- Wicklung und unterschiedlichen O-Ring-Einbausituationen, nämlich
a) einseitig außen,
b) einseitig innen,
c)Ausführungsbeispiel der Erfindung- beidseitig -.

Die Figur 1 zeigt das Ergebnis der Simulation zur Spannungsverteilung und/oder Laminatbeanspruchung durch die verschiedenen O-Ring Anordnungen a) bis c)

In der Simulation konnte gezeigt werden, dass die beidseitige O-Ring-Lagerung die beschriebenen mechanischen Vorteile aufzeigt. In Figur 1 sind zur Vereinfachung der Simulation U-Nuten verwendet worden. Es ist deutlich zu sehen, dass das Spaltrohr bei einseitiger O-Ring-Anordnung sowohl bei der Au-ßendichtung als auch bei der Innendichtung sichtbar aufgebogen wird und die Laminatbeanspruchung deutlich höher ist als bei der erfindungsgemäßen beidseitigen O-Ring-Anordnung. Der sog. Tsai-Wu-Faktor wertet die vorliegenden inneren Spannungszustände im Material gegen die Versagensgrenzen (Festigkeiten) des verwendeten FKV-Materials aus und ist damit ein Indikator für die vorliegende Laminatbeanspruchung. Je höher der Tsai-Wu-Faktor, desto höher ist die Laminatbeanspruchung. Im vorliegenden Fall treten im Spaltrohr bei den Varianten der einseitig angeordneten O-Ringe vor allem innere Zugspannungen in axialer Richtung auf. Diese stellen für das vorliegende FKV-Material eine Querbeanspruchung dar, in der wie beschrieben nur geringe Festigkeiten vorhanden sind, wodurch vergleichsweise hohe Tsai-Wu-Werte ermittelt werden.

Durch die Doppel-O-Ring-Anordnung kann der Tsai-Wu-Laminatbeanspruchungsfaktor im vorliegenden Fall von bestenfalls 0.29 (Außendichtung) bzw. 0.15 (Innendichtung) auf 0.04 reduziert werden, was einer Reduzierung der Beanspruchung von ca. 73% entspricht.

In Figur 1 sind drei Vergleichs-Beispiele jeweils im Querschnitt zu erkennen. Ganz oben die Außendichtung - also Stator-seitig mit einer einseitigen Abdichtung eines Spaltrohrs 1 durch einen O-Ring 2, der in einer U-Nut 3 gelagert ist. Die Spannungen, die sich dadurch in einem Spaltrohr 1 ergeben sind rechts davon verbildlicht. Die darunter liegende Darstellung der Figur 1 beschreibt das gleiche Simulationsergebnis für eine Innendichtung, also Rotor-seitig, wieder mit Querschnitt durch ein Axialende eines Spaltrohrs 1, mit einem O-Ring 2 und einer U-Nut 3. Die resultierenden Spannungen sind wieder rechts davon in der Spalte verbildlicht.

Schließlich ist ganz unten in Figur 1, weil am wenigsten belastet, eine Konstruktion einer Spaltrohr-Abdichtung nach einer Ausführungsform der Erfindung zu erkennen. Dort ist eine beidseitige Anordnung der O-Ringe 2 in jeweils einer U-Nut 3 auf beiden Seiten des Axialendes des Spaltrohrs 1 zu erkennen. Diese Konstruktion ergibt die geringste, annähernd Null auf der Von-Mises Spannungsskala in [MPa] (mittig) und annähernd Null auf der Tsai-Wu Laminat Skala (rechts) auf das Spaltrohr 1 wirkende Spannung und/oder Laminatbeanspruchung. Die Simulationen beziehen sich noch auf eine frühere Entwicklungsphase, in welcher U-Nuten für die O-Ringe eingesetzt wurden. Die Ergebnisse sollten aber, da sich die O-Ringe nicht gegeneinander verschieben beim untersuchten Lastfall, auch für trapezförmige Nuten gelten.

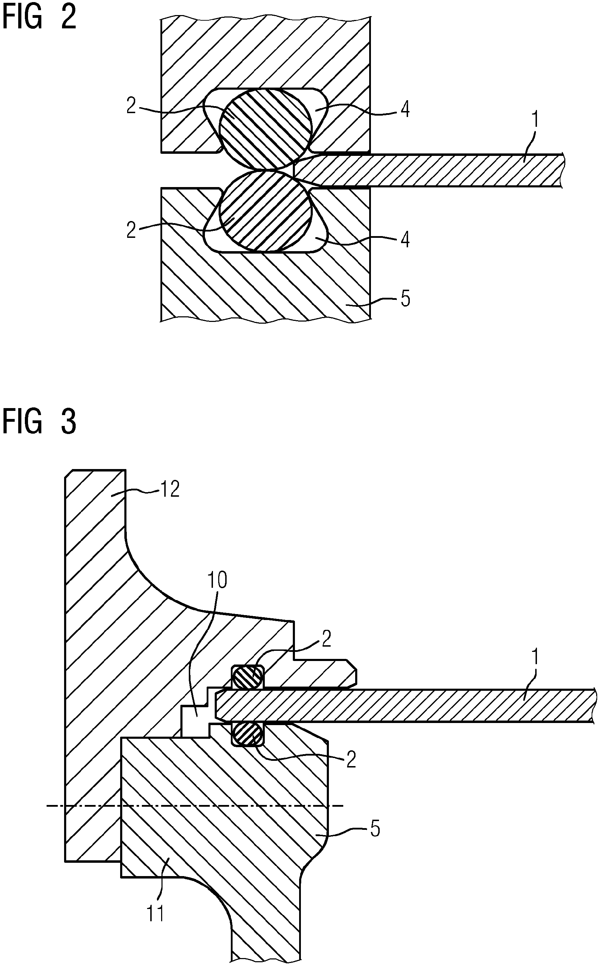

Figur 2 zeigt schematisch eine bevorzugte Ausführungsform der Erfindung mit zwei Elementen an jedem Axialende eines Spaltrohrs 1. Zu erkennen ist das Spaltrohr 1 - von dem nur der Abschnitt an einem Axialende im Querschnitt gezeigt ist - direkt bei der Montage vor dem Einschieben des dünnwandigen Spaltrohrs 1 in die durch zwei O-Ringe 2 vorgegebene Dichtkonstruktion. Die Dichtkonstruktion umfasst die beiden O-Ringe 2, die symmetrisch durch die beiden Trägerelemente 5, die eine jeweils gleich geformte trapez-förmige Nut 4 aufweisen, in Position gehalten werden. Da die beiden O-Ringe 2 aus elastischem Material sind, kann das Spaltrohr 1 mittels der Einführschrägen durch die zwei sich berührenden O-Ringe 2 durchgeschoben werden und diese dadurch auseinander und jeweils in die trapezförmige Nut 4 drücken, so das die Lagerungs- und Dichtkonstruktion des Spaltrohrs 1 fixiert ist.

Die konstruktiv komplexerer Lösung der in Figur 2 gezeigten Dichtung ist in Figur 3 gezeigt. In der Figur 3 ist wieder, wie in Figur 2, die Ausführungsform mit Doppel-O-Ring 2 - diesmal in einfachen U-Nuten gelagert - zu erkennen. Die Figur 3 zeigt auch wieder nur einen Abschnitt am Axialende des Spaltrohrs 1 im Querschnitt, allerdings diesmal - im Gegensatz zur Figur 2 - nicht vor der Montage, sondern in bereits montiertem Zustand. Das Axialende des Spaltrohrs 1 mit den Einführschrägen ist also bereits zwischen den beiden O-Ringen 2 platziert. Die Aufnahmevorrichtung für die Dichtelemente, hier in Form von einfachen U-Nuten gezeigt, dienen zur Halterung der O-Ringe 2 und sind in jeweils einer Tragkonstruktion 11 und 12 untergebracht. Die Tragkonstruktion 12 zeigt dabei weitere Merkmale, wie einen Ablauf 10. Die Tragkonstruktionen 11 und/oder 12 können als Teil des Gehäuses der elektrischen rotierenden Maschine und/oder als Teil eines Lagerschilds konzipiert sein.

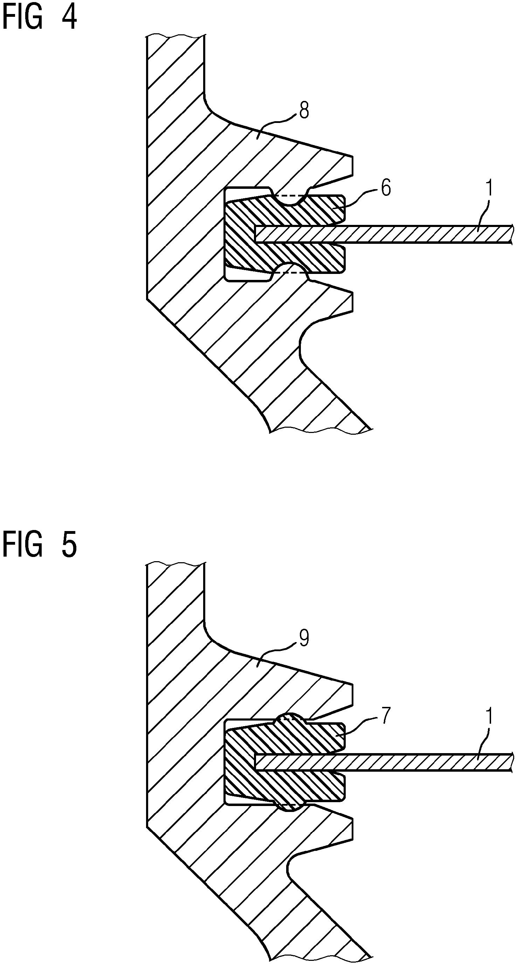

Figur 4 zeigt eine weitere Ausführungsform der Erfindung, erstmals mit einem einzigen Element 6, das beidseitig auf das Spaltrohr 1 abdichtend wirkt. Das Dichtelement 6, beispielsweise aus gummiartigem und/oder elastomerem Material, ummantelt das Axialende eines Spaltrohrs 1 vollumfänglich und wird in der Tragkonstruktion 8 durch kleine Ausbuchtungen oder "Nasen" gehalten. Durch die Ummantelung, die das Dichtelement 6 gegenüber dem Axialende des Spaltrohrs 1 gemäß der in Figur 4 gezeigten Ausführungsform zeigt, wirken am Spaltrohr 1 beidseitig symmetrische Kräfte. Bevorzugt werden hier gleichgroße Belastungen auf das Spaltrohr ausgeübt. Die Nasengröße wird konstruktiv so eingestellt, dass eine ausreichende Verpressung des Dichtelements gewährleistet werden kann, damit eine genügend hohe Flächenpressung zwischen Dichtelement und Spaltrohr herrscht, die eine genügend hohe Sicherheit gegen Flüssigkeitsdurchtritt besitzt.

Nach den gleichen technischen Prinzipien ist die Konstruktion gemäß der Figur 5 aufgebaut. Wieder ist ein Axialende eines Spaltrohrs 1 im Querschnitt zu sehen beidseitig von einem einzigen Dichtelement 7 ummantelt, wobei das Dichtelement durch Ausbuchtungen oder "Nasen" in Position innerhalb der Tragkonstruktion 9 gehalten wird.

Das Prinzip zum Design einer Aufnahmevorrichtung 3,4 für das Dichtelement 2,6 und 7 und/oder einer Tragkonstruktion 5, 8 und 9 gemäß der vorliegenden Erfindung ist dabei bevorzugt eines, bei dem durch die Belastung des Dichtelements 2, 6 und 7 im Betrieb - einerseits durch die Flüssigkeit im Statorbereich und andererseits durch die Lagerung des Spaltrohrs 1 - , dieses Dichtelement 2,6 und 7 tiefer in und/oder dichter an die Aufnahmevorrichtung 3 und 4 und/oder Tragkonstruktion 5, 8 und 9 angepresst wird.

Die beiden in den Figuren 4 und 5 gezeigten Elemente 6 und 7 sind im Vergleich zu den O-Ringen der Figuren 2 und 3 komplexere Dichtelemente und nicht unbedingt marktüblich. Sie zeichnen sich beispielsweise durch vorhandene Dichtlippen aus, die jeweils seitlich an das Axialende des Spaltrohrs angrenzen und dieses ummanteln. Insbesondere handelt es sich dabei um Dichtelemente, die neben der Dichtlippen auch einen Grundkörper umfassen, der sich in die Tragkonstruktion und/oder eine entsprechende Aufnahmevorrichtung einpasst. Insbesondere vorteilhaft ist dabei eine Ausführungsform beider die beiden Dichtlippen beim Fügen und Montieren des Spaltrohrs 1 in einer Aufnahmevorrichtung, beispielsweise in den Dichtspalt, das Spaltrohr umschließen und abdichten.

Als Vorteile dieser sicher kostspieligeren Lösung könnten beispielsweise sein:
- Die Nut, welche die Dichtlippen umschließt, lässt sich mit einem aushärtenden Flüssig-Dichtmaterial füllen, insbesondere vor dem Fügeprozess mit dem Spaltrohr 1. Das Dichtmaterial ist in der Lage, die möglicherweise raue und poröse Oberfläche des Spaltrohres 1 aus Faserverbundwerkstoff (FVK) zu füllen und auszugleichen, womit eine zuverlässige Dichtung gegen die Kühlflüssigkeit hergestellt werden kann.
- Durch die gegenüberliegenden Dichtlippen gleichen sich die wirkenden Dichtlippenkräfte aus und das Spaltrohr kann annähernd spannungsfrei gelagert werden.

Die beiden Ausführungen der Dichtelemente 6 und 7 in Figuren 4 und 5 unterscheiden sich in der Methodik, wie ein Anpressdruck des Dichtelements auf das Spaltrohr hergestellt wird von der Doppel-O-Ring-Lösung. Bei Figur 4 drücken sich überstehende Nasen der Tragkonstruktion 8, die hier z.B. integraler Teil des Lagerschilds ist, in das Dichtelement 6. Es wäre auch denkbar die Tragkonstruktion 8 in das Gehäuse zu integrieren. Bei Figur 5 drücken sich überstehende Nasen des Dichtelements 7 gegen die Wand der Tragkonstruktion 9.

Grundsätzlich sollten beide Varianten bzgl. der Dichtwirkung eine ähnliche Performance zeigen, allerdings ist Variante der Figur 4 vermutlich komplizierter zu fertigen.

Die konstruktive Besonderheit dieser in Figuren 4 und 5 gezeigten Ausführungsformen der Erfindung ist, dass ein gegenüber typischen Dichtungsanordnungen überlegenes Dichtungskonzept für Spaltrohre allgemein und insbesondere FKV-Spaltrohre präsentiert wird, wobei ein spezielles Dichtelement entwickelt wird, bei dem die Kontaktdruckkraft der eigentlich dichtenden Dichtlippe durch eine gegenüberliegende Dichtlippe ausgeglichen wird. Die gegenüberliegende Dichtlippen-Konstruktion gleicht damit den Nachteil der geringen axialen Verstärkung einer in radialer Richtung extrem steifen (CFK)-Umfangswicklung der Herstellung des Spaltrohrs aus, indem die Ursache eines kritischen lokalen Aufbiegens des Spaltrohrs, nämlich der Reaktionskraft des O-Rings auf das Spaltrohr, durch das gemäß den Ausführungsbeispielen der Figuren 4 und 5 - gemäße spezielle Dichtelement gänzlich verhindert wird. Au-ßerdem bietet diese Dichtungstechnik den Vorteil, die typischerweise raue und poröse FKV-Oberfläche des Spaltrohres mit einer Flüssigdichtung mit dem Dichtelement zu verbinden. So wird ein unkomplizierter und sicherer Einsatz der strukturell und hinsichtlich Wirbelstromverluste vorteilhaften CFK-Umfangswicklung in einem Spaltrohr in einer E-Maschine sichergestellt.

Die Spaltrohrbeanspruchung konnte durch die neuen Doppel-O-Ring-Konstruktion und die Ausführungsformen mit einem ummantelndem Element wie beispielsweise in Figuren 4 und 5 gezeigt, deutlich verringert werden. Dadurch ist die Dichtungstechnik in vielen typischen Spaltrohr-Auslegungen nicht der limitierende Faktor für die Wandstärke des Spaltrohres. Dünnere Wandstärken werden also ermöglicht, womit verschiedenste weitere Vorteile einhergehen. Außerdem sind reine Umfangswicklungen des Spaltrohres denkbar, welche besonders hohe Beuldrücke ermöglichen, da keine nennenswerte Beanspruchung auf dem Spaltrohr während des Betriebs zu erwarten ist. Erfahrungsgemäß stellt die Lagerung des Rohres die höchste Beanspruchung dar. Die eigentliche Betriebslast auf dem Spaltrohr, der Außendruck, erzeugt kaum eine Laminatbeanspruchung. Erst wenn der kritische Beuldruck erreicht wird und die strukturelle Integrität des Rohres verloren geht, werden festigkeitsgefährdende Spannungen erreicht im Spaltrohr.

Aus der DE 10 2020205287 A1 ist ein Spaltrohr bekannt, dass CF-HM/UHM-"hochmodulige und ultahochmodulige Carbonfasern" Verbundwerkstoffe umfasst. Durch die erläuterte Erfindung wird der Einsatz einer extrem steifen CF-UHM-Faser vereinfacht, welche enorm hohe Beuldrücke ermöglicht, da eine reine Umfangswicklung in der CF-UHM-Lage möglich ist. Die reine Umfangswicklung der CF-UHM-Faser minimiert Wirbelstromverluste im Spaltrohr. Durch die reine Umfangswicklung können sich keine ausgeprägten leitfähigen Strukturen im Spaltrohr ausbilden.

Das Spaltrohr lässt sich aber auch mit anderen Fasern oder gänzlich anderen - insbesondere auch anderen Leichtbaumaterialien als durch CF-UHM-Fasern umsetzen. Außerdem konnte durch die verringerten radialen Spaltrohrverformungen eine deutliche Vereinfachung in der Auslegung der elastomeren Dichtungen erreicht werden. Ein verringertes Aufbiegen des Spaltrohres durch die elastomere Dichtung führt auch zu einer zuverlässigeren Dichtwirkung, da Flächenpressungen zwischen O-Ring und Spaltrohr sowie O-Ring und Gehäuse realisierbar sind.

Durch die vorliegende Erfindung wird erstmals eine spannungsarme, Laminat-schonende und/oder annähernd beanspruchungsfreie Lagerung des Spaltrohres einer elektrischen rotierenden Maschine offenbart, weil das Dichtungskonzept eine beidseitige, insbesondere eine beidseitige und symmetrische Belastung des Spaltrohrs vorsieht.

## Patentansprüche

1. Elektrische rotierende Maschine oder Flüssigkeitspumpe, einen
- ersten Bereich, der Flüssigkeits-frei ist, einen
- zweiten Bereich, der Flüssigkeits-enthaltend ist und
- ein Spaltrohr, das die beiden Bereiche voneinander abdichtend trennt,
aufweisend,
wobei an jedem Axialende auf der Stator- und Rotorseitigen Oberfläche des Spaltrohrs (1) ein oder mehrere Elemente (2,6,7) vorgesehen sind, wobei die Elemente (2,6,7) gleich, ungleich, ummantelnd und/oder beidseitig wirkend sind, so dass durch das oder die Element(e) (2,6,7) ein zumindest teilweiser Ausgleich der am Axialende des Spaltrohrs (1) durch die Abdichtung wirkenden Kräfte resultiert.

2. Elektrische rotierende Maschine oder Flüssigkeitspumpe nach Anspruch 1, wobei ein Element (6,7) an jedem Axialende des Spaltrohrs (1) vorgesehen ist.

3. Elektrische rotierende Maschine oder Flüssigkeitspumpe nach Anspruch 1, wobei zwei Elemente (2) an jedem Axialende des Spaltrohrs (19 vorgesehen sind.

4. Elektrische rotierende Maschine oder Flüssigkeitspumpe nach einem der vorhergehenden Ansprüche, wobei eine symmetrische Anordnung der Elemente (2,6 und 7) auf beiden Seiten des Spaltrohrs (1) vorgesehen ist.

5. Elektrische rotierende Maschine oder Flüssigkeitspumpe nach einem der vorhergehenden Ansprüche, wobei zumindest ein Dichtelement vorgesehen ist.

6. Elektrische rotierende Maschine oder Flüssigkeitspumpe nach einem der vorhergehenden Ansprüche, wobei zumindest ein Dichtelement in Form eines O-Rings vorgesehen ist.

7. Elektrische rotierende Maschine oder Flüssigkeitspumpe nach einem der vorhergehenden Ansprüche, wobei zumindest eine Aufnahmevorrichtung (3,4) vorgesehen ist, durch die zumindest ein Element (2,6 7) in Position gehalten wird.

8. Elektrische rotierende Maschine oder Flüssigkeitspumpe nach einem der vorhergehenden Ansprüche, wobei zumindest eine Tragkonstruktion (5, 8 und 9) vorgesehen ist, in der zumindest eine Aufnahmevorrichtung (3,4) angeordnet ist.

9. Elektrische rotierende Maschine oder Flüssigkeitspumpe nach einem der vorhergehenden Ansprüche, wobei eine Aufnahmevorrichtung (3,4) in Form einer Nut ausgebildet ist.

10. Elektrische rotierende Maschine oder Flüssigkeitspumpe nach einem der vorhergehenden Ansprüche, wobei zumindest eine Tragkonstruktion (5,8 und 9) Teil des Gehäuses ist.

11. Elektrische rotierende Maschine oder Flüssigkeitspumpe nach einem der vorhergehenden Ansprüche, wobei zumindest eine Tragkonstruktion (5,8 und 9) Teil des Lagerschilds ist.

12. Elektrische rotierende Maschine oder Flüssigkeitspumpe nach einem der vorhergehenden Ansprüche, wobei zumindest ein Dichtelement (6,7) Dichtlippen umfasst.

13. Elektrische rotierende Maschine oder Flüssigkeitspumpe nach einem der vorhergehenden Ansprüche, wobei zumindest ein Dichtelement eine Dichtlippe umfasst.

14. Elektrische rotierende Maschine oder Flüssigkeitspumpe nach einem der vorhergehenden Ansprüche, wobei zumindest eine Aufnahmevorrichtung (3,4) und/oder eine Tragkonstruktion (5,8 und 9) eine Ausbuchtung und/oder Nase umfasst.

15. Elektrische rotierende Maschine oder Flüssigkeitspumpe nach einem der vorhergehenden Ansprüche, bei der zwei Dichtlippen beim Fügen und Montieren des Spaltrohrs (1) in der Aufnahmevorrichtung das Spaltrohr umschließen und abdichten.
